Europäisches Patentamt

European Patent Office

Office européen des brevets

(11) Veröffentlichungsnummer: **0 074 499**
**A2**

## (12) EUROPÄISCHE PATENTANMELDUNG

(21) Anmeldenummer: **82107391.3**

(22) Anmeldetag: **13.08.82**

(51) Int. Cl.³: **G 02 B 7/26**

(30) Priorität: **15.09.81 DE 3136584**

(43) Veröffentlichungstag der Anmeldung:
**23.03.83** Patentblatt **83/12**

(84) Benannte Vertragsstaaten:
**AT BE CH FR GB IT LI LU NL SE**

(71) Anmelder: **SIEMENS AKTIENGESELLSCHAFT**
**Berlin und München Wittelsbacherplatz 2**
**D-8000 München 2(DE)**

(72) Erfinder: **Mahlein, Hans, Dr.rer.nat.**
**Queristrasse 2**
**D-8025 Unterhaching(DE)**

(54) **Optisches Dämpfungsglied.**

(57) Es wird ein optisches Dämpfungsglied mit fester Dämpfung beschrieben, bei dem das wesentliche eine dünne Metallschicht in einem Lichtwellenleiter (1) ist, deren Dicke so bemessen ist, daß eine gewünschte Resttransmission und damit Dämpfung erzielt wird. Diese Metallschicht wird auf eine Glasfaserstirnfläche aufgedampft oder eine metallisch bedampfte Folie wird auf eine Glasfaserstirnfläche geklebt. Das Dämpfungsglied wird in Glasfaserstrecken der optischen Nachrichtentechnik verwendet.

FIG 1a

EP 0 074 499 A2

SIEMENS AKTIENGESELLSCHAFT    Unser Zeichen
Berlin und München    VPA 81 P 7112 E

Optisches Dämpfungsglied

Die Erfindung bezieht sich gemäß dem Oberbegriff des Patentanspruchs 1 auf ein optisches Dämpfungsglied mit fester Dämpfung.

Optische Dämpfungsglieder für Glasfaserstrecken werden z.B. benötigt, wenn die Dynamik (ca. 20-30 dB) des Empfängers für eine zu hohe ankommende Leistung nicht ausreicht oder für Messungen an Übertragungsstrecken. Da eine derartige Leistungsabschwächung möglichst modenneutral erfolgen soll, kommt eine Dämpungserhöhung durch Vergrößerung des Abstandes zwischen den beiden Faserstirnflächen in einer Glasfasersteckverbindung nicht in Betracht. Relativ komplizierte optische Dämpfungsglieder, die zur Strahlformung Linsen enthalten, werden beispielsweise von Nippon Electric Co. Ltd. angeboten (s. dazu Optical Devices and Measuring Set Katalog, Nippon Electric Co., (1981)). Sie sind sowohl mit kontinuierlich einstellbarer Dämpfung als auch mit fester Dämpfung erhältlich.

Aufgabe der Erfindung ist es, ein einfach aufgebautes und herstellbares Dämpfungsglied der genannten Art anzugeben, bei dem keine Linsen benötigt werden.

Diese Aufgabe wird durch die im kennzeichnenden Teil des Patentanspruchs 1 angegebenen Merkmale gelöst.

Durch dieses erfindungsgemäße Dämpfungsglied wird insbesondere für Glasfaserstrecken eine weitgehend modenneutrale und wellenlängenunabhängige Dämpfung erreicht.

Zur Vermeidung einer Störung durch an der Metallschicht zurückreflektierte Strahlung wird ein erfindungsgemäßes

Ed 1 The - 7. Sept. 1981

Dämpfungsglied vorteilhafterweise so ausgebildet, wie es im Anspruch 2 angegeben ist.

In einer bevorzugten Ausführungsform eines erfindungsgemäßen Dämpfungsgliedes besteht gemäß Anspruch 3 der optische Wellenleiter aus einem Glasfaser-Lichtwellenleiter.

Die Dämpfung eines erfindungsgemäßen Dämpfungsgliedes ist in einem weiten Spektralbereich, typischerweise in einem Bereich von 700 nm bis 1500 nm nahezu wellenlängenunab- hängig.

Ein erfindungsgemäßes Dämpfungsglied läßt sich auf einfache Weise so herstellen, wie es im Anspruch 4 angegeben ist.

Vorteilhaft und zweckmäßig ist es bei einem solchen Verfahren so vorzugehen, wie es im Anspruch 5 angegeben ist. Dieses Verfahren wird bei Glasfaser-Lichtwellenleitern mit einem Ausgangskörper ausgeführt, wie er aus dem Anspruch 6 hervorgeht. Gemäß dem Anspruch 7 wird der Glasfaser-Lichtwellenleiter derart schräg zur optischen Achse der Faser oder Faserachse durchtrennt, daß an der Metallschicht reflektiertes Licht an der von der Furche abgewandten Seite die Faser verläßt.

Zwei Ausführungsbeispiele der Erfindung sind in den Figuren dargestellt und werden in der folgenden Beschreibung näher erläutert. Von den Figuren zeigen:
Fig. 1 a) und b)
    einen Längsschnitt bzw. Querschnitt durch ein aus Glasfaser-Lichtwellenleitern gebildetes Dämpfungsglied mit direkt bedampfter Glasfaserstirnfläche,
Fig. 2 a) und b)
    einen Längs- bzw. Querschnitt durch ein ebenfalls aus Glasfaser-Lichtwellenleitern gebildetes Dämpfungsglied mit eingeklebter, vorabbedampfter Folie und

Fig. 3 in einem Schaubild die Abhängigkeit des Transmissionsvermögens T, Reflexionsvermögens R und der Absorption A von der Dicke T einer Metallschicht.

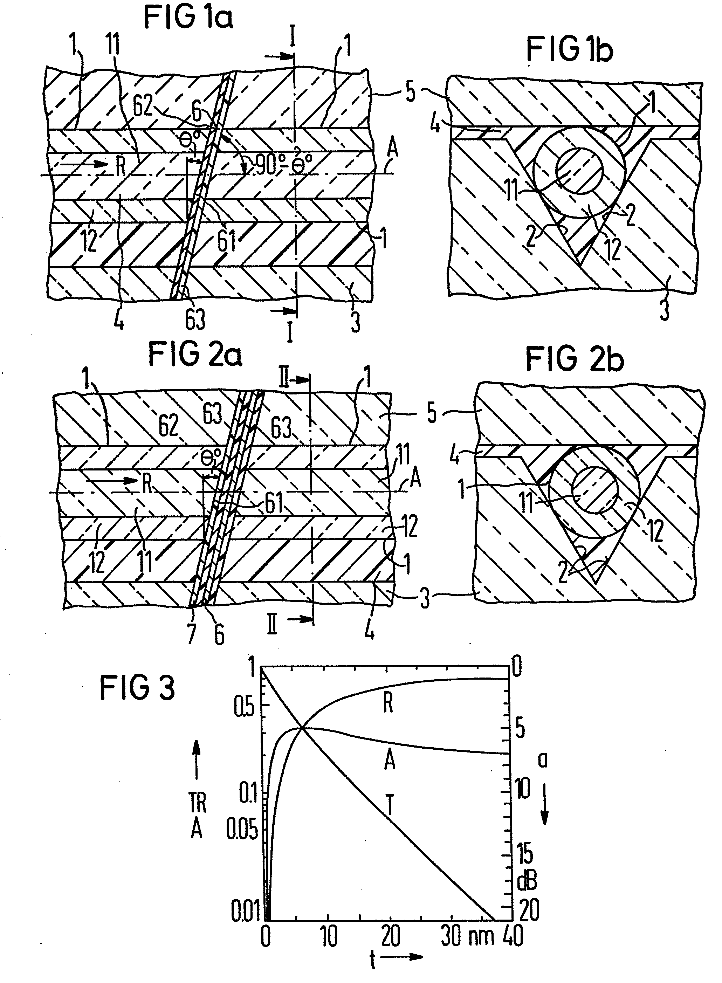

Die in den Figuren 1b) und 2b) dargestellten Querschnitte sind längs den Schnittlinien I-I bzw. II-II in den Figuren 1a) bzw. 2a) geführt, während die in den Figuren 1a) und 2a) dargestellten Querschnitte vertikale Schnitte durch die Faserachse sind.

Gemäß den Figuren ist der aus einer Kern-Mantel-Glasfaser bestehende Glasfaser-Lichtwellenleiter 1 in einer durch anisotropes Ätzen erzeugten V-förmigen Furche 2 in einem Siliziumsubstrat 3 angeordnet und mit optischem Kitt 4 darin befestigt. Der optische Kitt 4 verklebt auch das Siliziumsubstrat 3 mit einem Deckplättchen 5 aus Glas, das die Faser 1 abdeckt und vorzugsweise die von der Furche 2 abgewandte Seite der Faser 1 berührt. Der Faserkern mit dem Brechungsindex $n_0$ ist mit 11 und der den Kern umgebende Fasermantel mit einem geringeren Brechungsindex ist mit 12 bezeichnet.

Quer durch die Faser 1 erstreckt sich eine Metallschicht 6, deren Dicke so bemessen ist, daß ein gewünschter Rest der in der Faser 1 im wesentlichen im Bereich des Kernes 11 geführten Strahlung die Metallschicht 6 durchstrahlen kann (gewünschte Resttransmission), während die übrige Strahlung absorbiert oder reflektiert wird.

Der prinzipielle Verlauf von Transmissionsvermögen T, Reflexionsvermögen R und Absorption A einer Metallschicht als Funktion der Schichtdicke t ist dem in Figur 3 dargestellten Schaubild entnehmbar, das bereits aus H.F. Mahlein, Design of Beam Splitters for Optical Fiber Tapping Elements, Siemens Forsch.- und Entw.-Ber. 8 (1979) S. 136 bis 140 bereits entnehmbar ist.

Gemäß diesem Schaubild nimmt das Transmissionsvermögen T mit wachsender Schichtdicke t kontinuierlich ab, und zwar erhält man einen näherungsweise expondentiellen Abfall. Das Reflexionsvermögen R steigt zunächst mit zunehmendem t stark an und strebt dann einem von t unabhängigen Grenzwert zu. Die Kurve für die Absorption A erreicht nach einem steilen Anstieg bei einem bestimmten t ein Maximum, fällt anschließend leicht ab und strebt einem von t unabhängigen Grenzwert zu. Bezüglich Einzelheiten der Berechnung von T, R und A wird auf die genannte Literaturstelle Mahlein verwiesen.

Aus dem Transmissionsvermögen T folgt die Dämpfung a in dB zu

$$a = - 10 \lg T.$$

Da die optischen Konstanten von Metallen im interessierenden Wellenlängenbereich von 700 nm bis 1500 nm nur schwach von der Wellenlänge abhängen, ist die Dämpfung a im betrachteten Spektralbereich weitgehend wellenlängenunabhängig. Als Metall kommt beispielsweise Aluminium in Betracht.

Während die absorbierte Strahlung in der Metallschicht in Wärme umgewandelt wird und folglich nicht stört, können durch Rückführung der reflektierten Strahlung in Richtung zum Sender unerwünschte Effekte auftreten. Die Metallschicht darf folglich nicht senkrecht zur Faserachse angeordnet werden, sondern muß aus der senkrechten Lage um einen bestimmten Winkel $\theta_0$ gegen die Faserachse geneigt sein, dessen Minimalwert durch

$$\arcsin (A_N/n_0)$$

gegeben ist, wobei $A_N$ die numerische Apertur der Faser 1

und $n_0$ den mittleren Brechungsindex des Faserkerns 11 bedeuten. Für eine typische Gradientenfaser mit $A_N = 0,18$ $n_0 = 1,46$ ergibt sich der Minimalwert für $\theta_0$ zu 7,1°. Ein typischer Wert für die Abweichung der Metallschicht 6 von der Senkrechten ist $\theta_0 = 10°$ gegeben. Um durch die Metallschicht keine unerwünschte Diskriminierung zwischen unterschiedlichen Polarisationsrichtungen zu bewirken, darf $\theta_0$ nicht wesentlich größer als der Minimalwert sein.

Die beiden in den Figuren 1a) und 1b) bzw. 2a) und 2b) dargestellten Ausführungsformen unterscheiden sich im wesentlichen nur durch die verschiedenen Befestigungsweisen der Metallschicht 6 in der Faser 1. In der Ausführungsform gemäß den Figuren 1a) und 1b) ist die Metallschicht 6 direkt auf eine polierte Faserstirnfläche 61 aufgedampft, während in der Ausführungsform gemäß den Figuren 2a) und 2b) eine metallisch bedampfte Folie 7 auf eine Faserstirnfläche geklebt ist.

Die Herstellung eines Dämpfungsgliedes kann so erfolgen, daß die Metallschicht entweder direkt auf eine schräg polierte Glasfaserstirnfläche aufgedampft wird oder daß eine vorab bedampfte, dünne Kunststoffolie, beispielsweise eine Kaptonfolie auf eine schräg polierte Glasfaserstirnfläche geklebt wird. Zur Weiterführung des transmittierten Lichtes wird eine zweite Faser fluchtend zur ersten Faser mit der Metallschicht bzw. ihrem Kunststoff-Substrat verklebt. Die einzelnen Herstellungsschritte können ähnlich wie bei der Fabrikation von Glasfaserabzweigen und Wellenlängenmultiplex-Bausteinen nach dem Strahlteilerprinzip ausgeführt werden (s. dazu H.F. Mahlein, Design of Beam Splitters for Optical Fiber Tapping Elements, Siemens Forsch.-u. Entw. Ber. 8 (1979) 136-140; A. Reichelt, G. Winzer, H. Michel, F. Auracher, F. Heyer, W. Rauscher, Improved Optical Tapping Elements for Graded Index Optical Fibers, Siemens Forsch.- u. Entw.Ber. 8 (1979) 130 - 135; H.F. Mahlein, H. Michel, W. Rauscher, A. Reichelt, G. Winzer, Interference Filter All-Fibre Directional Coupler for W.D.M. Electron. Lett. 16 (1980) 584 - 585; G. Winzer, H.F. Mahlein, A. Reichelt, Singlemode and Multimode All-Fiber Directional Couplers for WDM Appl. Optics 20 (1981)).

Insbesondere können zur Faserhalterung durch anisotropes Ätzen von Silizium hergestellte V-förmige Führungsnuten dienen. In den Ausführungsformen gemäß den Figuren 1a), b) und 2a), b) ist davon Gebrauch gemacht. In den genannten Figuren ist der optische Kitt, der Faserstirnflächen 61, 62 mit der Metallschicht 6 oder der Kunststoff-Folie 7 verbindet, Figuren 1a und 2a, mit 63 bezeichnet.

Das ganze Dämpfungsglied kann in ein Gehäuse mit Steckerflanschen am Ein- und Ausgang eingebaut werden. Bei Verzicht auf Steckerflansche kann das Dämpfungsglied auch in eine Glasfaserstrecke eingespleißt werden.

Da Licht, das in Richtung auf eine Siliziumfurche reflektiert wird, von letzterer ähnlich wie von einem Winkelspiegel zurückreflektiert wird, empfiehlt es sich, die zur Faserachse geneigte Metallschicht 6 bezüglich der Ausbreitungsrichtung$^R$ der Strahlung so zu neigen, daß an der Metallschicht reflektiertes Licht aus der von der V-förmigen Furche 2 abgewandten Seite der Faser 1 austritt.

3 Figuren

7 Patentansprüche

Patentansprüche

1. Optisches Dämpfungsglied mit fester Dämpfung, g e - k e n n z e i c h n e t durch eine quer durch einen optischen Wellenleiter (1) sich erstreckende Metallschicht (6), deren Dicke so bemessen ist, daß eine gewünschte Resttransmission und damit eine gewünschte Dämpfung vorhanden ist.

2. Dämpfungsglied nach Anspruch 1, dadurch g e k e n n - z e i c h n e t , daß die Metallschicht (6) schräg zur optischen Achse (A) des Wellenleiters (1) angeordnet ist, derart, daß eine Seite der Metallschicht (6) mit der optischen Achse (A) höchstens einen Winkel von $90° - \arcsin(A_N/n_0)$ einschließt, wobei $A_N$ die numerische Apertur des Wellenleiters und $n_0$ den mittleren Brechungsindex des wellenführenden Mediums des Wellenleiters (1) bedeuten.

3. Dämpfungsglied nach Anspruch 1 oder 2, dadurch g e k e n n z e i c h n e t , daß der optische Wellenleiter (1) aus einem Glasfaser-Lichtwellenleiter besteht.

4. Verfahren zur Herstellung eines Dämpfungsgliedes nach einem der vorhergehenden Ansprüche, dadurch g e - k e n n z e i c h n e t , daß auf eine polierte Stirnfläche eines ersten optischen Wellenleiters die Metallschicht (6) aufgedampft oder eine vorab mit der Metallschicht (6) bedampfte Folie (7) aufgeklebt wird, und daß ein zweiter optischer Wellenleiter fluchtend zum ersten Wellenleiter mit der Metallschicht (6) oder der Folie (7) verklebt wird.

0074499

5. Verfahren nach Anspruch 4, dadurch g e k e n n - z e i c h n e t , daß ein auf einem Substrat befestigter optischer Wellenleiter zusammen mit dem Substrat durchtrennt und die entstandenen Trennteile nach einem Polieren der Trennflächen und mit auf eine Trennfläche aufgebrachter oder zwischen die Trennfläche gebrachter Metallschicht wieder so zusammengeklebt werden, daß die beiden Wellenleiterhälften wieder fluchten.

6. Verfahren nach Anspruch 5 zur Herstellung eines Deämpfungsglieds nach Anspruch 3, dadurch g e k e n n - z e i c h n e t , daß von einem Siliziumsubstrat ausgegangen wird, in das durch anisotropes Ätzen eine V-förmige Furche eingeätzt worden ist, in welcher der Glasfaser- Lichtwellenleiter angeordnet und befestigt ist.

7. Verfahren nach einem der Ansprüche 4 bis 7, dadurch g e k e n n z e i c h n e t , daß der optische Wellen- leiter (1) derart schräg zur optischen Achse durchtrennt wird, daß danach die Metallschicht bezüglich der Ausbreitungsrichtung der Strahlung so zur optischen Achse geneigt ist, daß an ihr reflektiertes Licht aus der von dem Substrat abgewandten Seite des Wellenleiters austritt.

FIG 1a

FIG 1b

FIG 2a

FIG 2b

FIG 3